**Europäisches Patentamt**

**European Patent Office**

**Office européen des brevets**

(11) Veröffentlichungsnummer: **0 056 494**
**B1**

(12) **EUROPÄISCHE PATENTSCHRIFT**

(45) Veröffentlichungstag der Patentschrift: **27.05.87**

(51) Int. Cl.⁴: **G 05 D 23/32**

(21) Anmeldenummer: **81110816.6**

(22) Anmeldetag: **29.12.81**

(54) Thermostat zum Betätigen eines Steuerorgans.

(30) Priorität: **08.01.81 DE 3100276**

(43) Veröffentlichungstag der Anmeldung:
**28.07.82 Patentblatt 82/30**

(45) Bekanntmachung des Hinweises auf die
Patenterteilung:
**27.05.87 Patentblatt 87/22**

(84) Benannte Vertragsstaaten:
**AT CH DE FR LI**

(56) Entgegenhaltungen:
**DE-A-2 421 810**
**FR-A-2 417 232**
**GB-A- 912 026**

(73) Patentinhaber: **Luik, Manfred**
**Ulmer Strasse 18**
**D-7250 Leonberg (DE)**

(72) Erfinder: **Luik, Manfred**
**Ulmer Strasse 18**
**D-7250 Leonberg (DE)**

(74) Vertreter: **Schweikhardt, Friedrich, Dipl.-Ing.**
**Schulstrasse 27**
**D-7250 Leonberg 7 Warmbronn (DE)**

Courier Press, Leamington Spa, England.

## Beschreibung

Die vorliegende Erfindung bezieht sich auf einen Thermostaten nach dem Oberbegriff des Anspruchs 1.

Solche Thermostaten dienen dazu, ein Steuerorgan, insbesondere ein Ventil an einem Heizkörper, abhängig von der am Thermostaten herrschenden Temperatur zu betätigen, insbesondere zu öffnen oder zu schließen. Sie werden mit Hilfe des Stellgriffes so eingestellt, daß eine gewünschte Temperatur aufrecht erhalten wird. Häufig wird gewünscht, daß diese Temperatur, insbesondere ein Raumtemperatur, zu bestimmten Zeiten einen niedrigeren Wert annehmen soll. Dazu dient das Heizelement. Es wird von der an einer zentralen Stelle befindlichen oder von der dem Thermostaten besonders zugeordneten Schaltuhr zur gewünschten Zeit mit Strom versorgt. Dadurch erwärmt es den Stellzylinder in bestimmtem Ausmaß, so daß dieser schon bei geringerer Umgebungstemperatur anspricht.

Eine solche Temperaturabsenkung ist besonders wichtig für Räume, die nur einen Teil des Tages oder nicht alle Tage benützt werden, wie Büros oder Schulen. Dabei hat sich als Mangel gezeigt, daß nicht ohne weiteres festgestellt werden konnte, ob die Heizelemente an allen Thermostaten richtig eingeschaltet wurden. Das fällt besonders ins Gewicht, wo viele Thermostaten in einem Raum sind, gewöhnlich an Heizkörpern und nicht immer leicht zugänglich befestigt, so daß es sehr mühsam wäre, eine größere Zahl von Schaltuhren auf ihren Schaltzustand zu kontrollieren oder eine zentrale Schaltstelle aufzusuchen, die weit entfernt untergebracht ist. Außerdem war nicht nachprüfbar, ob die von der Schaltstelle angelegte Spannung auch tatsächlich am Heizelement jedes Thermostaten ankommt. Daher konnte es vorkommen, daß Störungen lange Zeit nicht bemerkt wurden und unnötig Energie verbraucht wurde. Im Hinblick auf den sparsamen Umgang mit Energie ist dieser Zustand unbefriedigend.

Diese Nachteile werden nach der Erfindung durch die Mittel vermieden, die im Kennzeichnungsteil des Anspruchs 1 wiedergegeben sind. Solche Sichtzeichen erlauben es, daß man beim Betreten eines Raumes sofort bei sämtlichen Thermostaten erkennen kann, ob sie ordnungsgemäß auf Senken der Temperatur geschaltet sind. Das macht es erst möglich, häufig Kontrollen vorzunehmen und bei Störungen rasch einzugreifen.

Von einem Yoghurtbereiter ist es zwar bekannt, das Umschalten auf Niedriglast bei Erreichen einer optimalen Temperatur durch ein fest angebrachtes Sichtzeichen erkennbar zu machen, das parallel zu einem die hauptsächliche Heizleistung aufbringenden Widerstand geschaltet ist. Ein Hinweis darauf, wie und mit welcher Funktion ein Sichtzeichen besonders zweckmäßig an einem Thermostat der angegebenen Art angebracht werden könnte, ist daraus aber nicht zu entnehmen.

Ausführungsbeispiele der Erfindung sind in der Zeichnung wiedergegeben. Es zeigen
Fig. 1 einen Thermostaten im Schnitt,
Fig. 2 eine zweite Ausfuhrungsform eines Thermostaten im Schnitt.

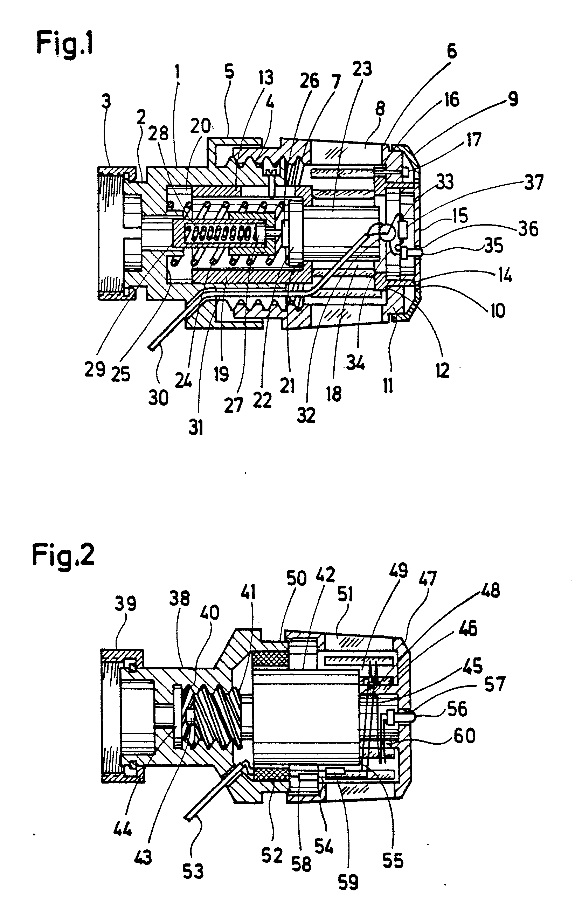

Der Thermostat nach Fig. 1 hat ein Gehäuse 1, an dessen Hals 2 eine Überwurfmutter 3 angebracht ist. Sie dient dazu, den Thermostaten an dem von ihm zu betätigenden Steuerorgan zu befestigen, insbesondere an einem Ventil einer Heizungsanlage. Das Gehäuse 1 hat ein Gewinde 4 und außerhalb von diesem auf einem Teil seiner Länge eine becherartige Schutzwand 5. Zwischen diese und das Gewinde 4 ist ein Ende eines Stellgriffs 6 mit einem Innengewinde 7 eingeschraubt. Der Stellgriff hat Längsschlitze 8, welche der Außenluft den Zutritt ins Innere gestatten.

Auf seiner Stirnseite hat der Stellgriff 6 einen abnehmbaren Deckring 9, der eine Aussparung 10 frei läßt. Gegen eine Querwand 11 des Stellgriffs liegt mit einem Bund 12 eine Schiebehülse 13 an. Sie greift mit einem zylinderförmigen Fortsatz 14 in die Aussparung 10. Dieser ist durch einen abnehmbaren Deckel 15 verschlossen.

Die Schiebehülse 13 trägt an ihrem Bund 12 einen radialen Anschlag 16. In die Querwand 11 des Stellgriffs eingesetzte Stifte 17 begrenzen gegebenenfalls den Drehwinkel des Stellgriffs und damit die mit dem Thermostaten einzustellende Temperatur.

Der Bund 12 der Schiebehülse 13 ist lediglich durch Längsstege 18 mit deren zylinderförmigen Hauptteil 19 verbunden, so daß auch hier die Umgebungsluft leicht durchtreten kann. Der Hauptteil 19 ist in einer Ausnehmung 20 des Gehäuses 1 geführt. Am Übergang zu den Längsstegen 18 ist in dem Hauptteil eine Schulter 21 gebildet. Gegen diese liegt ein Bund 22 eines Stellzylinders 23, der in den Raum zwischen den Längsstegen 18 bis an die Aussparung 10 heran ragt. Der Stellzylinder ist mit Dehnstoff gefüllt. Er wird von einer Druckfeder 24, die sich am Grund 25 der Ausnehmung 20 abstützt, gegen die Schulter 21 der Schiebehülse 13, und diese dadurch gegen die Querwand 11 gedrückt.

Aus dem Stellzylinder 23 ragt ein Stellkolben 26. Er ist über einen Flansch 27 und eine Feder 28 mit einem hohlen Stellstift 29 verbunden, den er nach Zusammendrücken der Feder unmittelbar berührt. Der Stellstift wirkt mit einem Stellglied des vom Thermostaten zu beeinflussenden Steuerorgans zusammen, wenn der Thermostat an dem Steuerorgan befestigt ist.

Von einer nicht dargestellten Schaltuhr führt ein Kabel 30 in das Gehäuse 1 und durch eine Nut 31 der Schiebehülse 13 zwischen den Längsstegen 18 hindurch zu einem als Heizkörper dienenden Widerstand 32. Jede der beiden Adern des Kabels 30 ist mit einem Ende des Widerstands 32 verbunden. An die Enden des Widerstands sind außerdem zwei Leitungen 33, 34 angeschlossen, die zu einer Leuchtdiode 35 führen. Diese dient als Sichtzeichen. Sie ist wie auch der eng am Stellzylinder 23 anliegende Widerstand 32 in der Aussparung 10 untergebracht und ragt durch eine Öffnung 36 des Deckels 15. In die Leitung 33 ist ein Widerstand 37 eingesetzt, da die Leichtdiode 35 eine kleinere Spannung benötigt als der Widerstand 32.

Durch Verdrehen des Stellgriffs 6 wird über die Schiebehülse 13 der Stellzylinder 23 mehr oder weniger gegen die Kraft der Druckfeder 24 zu dem Hals des Gehäuses 1 hin verschoben. Dadurch wird die Temperatur eingestellt, bei welcher der Stellkolben 26 das vom Thermostaten beeinflußte Steuerorgan betätigt, z.B. ein Ventil öffnet oder schließt.

Zu vorbestimmten Zeiten erhält der Widerstand 32 Spannung. Er heizt dadurch den Stellzylinder 23 um ein bestimmtes Maß auf, so daß der Stellkolben 26 schon bei einer niedrigeren Umgebungstemperatur in Tätigkeit tritt. Solange der Widerstand 32 Spannung erhält, leuchtet auch die Leuchtdiode 35. Es ist also auf den ersten Blick zu sehen, ob die Temperaturabsenkung richtig eingeschaltet und am Thermostate wirksam ist.

Bei dem Ausführungsbeispiel nach Fig. 2 hat der Thermostat ein Gehäuse 38, an dem wiederum ein Überwurfmutter 39 befestigt ist, mit welcher der Thermostat an einem zu beeinflussenden Steuerorgan angebracht wird. Das Gehäuse hat ein Gewinde 40. In dieses ist ein Fortsatz 41 eines Stellzylinders 42 geschraubt. Der zugehörige Stellkolben 43 ragt in eine Ausnehmung 44 des Gehäuses 38. Er betätigt das Stellglied des vom Thermostaten zu betätigenden Steuerorgans.

Am entgegengesetzten Ende hat der Stellzylinder 42 einen zylindrischen Fortsatz 45. Über ihn ist ein ringförmiger Ansatz 46 eines Stellgriffs 47 geschoben und mit einer Schraube 48 befestigt. Der Stellgriff übergreift haubenartig den Stellzylinder 42 mit dem ihn umgebenden Hohlraum 49 und je nach seiner Lage mehr oder weniger den ringförmigen Endabschnitt 50 des Gehäuses 38. Er hat Schlitze 51, welche der Außenluft Zugang zum Stellzylinder 42 erlauben.

In dem Endabschnitt 50 des Gehäuses 38 ist eine als Heizkörper dienende Spule 52 untergebracht. Sie liegt nahe an dem Stellzylinder 42. Zu den Enden der Spule 52 führen zwei Adern eines Kabels 53. Von den Enden der Spule 52 gehen Leitungen 54, 55 zu einer Leuchtdiode 56, die in dem Stellgriff 47 befestigt ist und durch eine Öffnung 57 in der Mitte von dessen Stirnseite ragt. In jede der Leitungen 54, 55 ist, um eine symmetrische Schaltung zu erhalten, ein Widerstand 58, 59 eingesetzt. In dem Hohlraum 49 sind die Leitungen 54, 55 in weiten Schraubenwindungen um den Ansatz 46 herum geführt und treten dann durch einen Schlitz 60 dieses Ansatzes in dessen Mitte zu der Leuchtdiode 56. Der Stellgriff 47 kann sich daher zusammen mit dem Stellzylinder 42 gegenüber dem Gehäuse 38 und damit der Spule 52 drehen und verschieben; diese Lageveränderungen werden von den Windungen der Leitungen 54 und 55 ausgeglichen.

Die Wirkungsweise des Thermostaten ist die gleiche wie bei dem Thermostaten nach Fig. 1. Durch Drehen des Stellgriffes 44 wird die achsiale Lage des Stellzylinders 42 und damit die Ansprechtemperatur des Thermostaten eingestellt. In den Zeiten, zu denen die Ansprechtemperatur gesenkt werden soll, erhält die Spule 52 Spannung. Dadurch leuchtet auch die Leuchtdiode 56. Es ist also sofort zu erkennen, ob die Temperatur-Absenkung wirksam ist oder nicht.

Thermostaten nach der Erfindung können nicht nur zum Betätigen von Ventilen eingesetzt werden, sondern z.B. auch für Regler von elektrischen Heizungen, und zum Steueren von Prozessen. Stets ist es ein Vorteil, rasch und übersichtlich erkennen zu können, ob die für bestimmte Zeiten vorgesehene Temperatursenkung wirksam gesteuert wird.

Zusätzlich zu der Tatsache, daß die durch Einschalten des Heizkörpers bewirkte Temperatursenkung wirksam ist, läßt sich deren Ausmaß an der Helligkeit der Diode erkennen. Wenn verschiedene Stufen der Temperatursenkung eingestellt und überwacht werden sollen, lassen sich auch Sichtzeichen anordnen, die diese Stufen erkennen lassen. Dazu dienen z.B. je nach der anliegenden Spannung in verschiedenen Farben leuchtende Dioden, oder läßt sich eine derartige Wirkung des Sichtzeichens durch zusätzlich zu ihm geführte Leitungen erreichen.

Als Sichtzeichen können Lichtquellen verschiedener bekannter Art verwendet werden, aber auch beispielsweise bewegte Teile, die im erregten Zustand besonders hervortreten oder sich über einer Skala bewegen oder verschiedene Farben erkennen lassen, oder es werden Anzeigedioden benützt, die verschiedenartige Zeichen erkennen lassen. Als verbindende elektrische Mittel können auch z.B. dehnbare Leitungen oder Schleifkontakte vorgesehen sein.

**Patentansprüche**

1. Thermostat zum Betätigen eines Steuerorgans, insbesondere eines Ventils, mit einem Stellzylinder, der mit Hilfe eines in ihm enthaltenen Dehnstoffes einen das Steuerorgan betätigenden Stellkolben abhängig von seiner Temperatur verschiebt, und mit einem am Stellzylinder anliegenden Heizelement, das zum Einstellen der Dauer einer Raumtemperaturabsenkung von einer Schaltuhr zeitgesteuert ist und während dieser Zeit die Temperatur des Stellzylinders gegenüber der Umgebung erhöht, mit einem zum Einstellen der Ansprechtemperatur des Thermostaten dienenden, gegenüber dem Gehäuse des Thermostaten verdrehbaren Stellgriff (6; 47), dadurch gekennzeichnet, daß am Stellgriff (6; 47) ein Sichtzeichen (Leuchtdiode 35; 56) angeordnet ist, das in Abhängigkeit des Einschaltzustands des Heizelements (Widerstand 32; 57) sichtbar wird.

2. Thermostat nach Anspruch 1, dadurch gekennzeichnet, daß das Heizelement ein elektrischer Widerstand (32; 52) und das Sichtzeichen eine parallel dazu geschaltete Anzeigevorrichtung ist.

3. Thermostat nach Anspruch 2, dadurch gekennzeichnet, daß mindestens in eine der beiden Leitungen (33, 34; 54, 55) zwischen dem Widerstand (32; 52) und dem Sichtzeichen ein weiterer Widerstand (37; 58, 59) eingeschaltet ist.

4. Thermostat nach Anspruch 3, dadurch gekennzeichnet, daß das Sichtzeichen eine Leuchtdiode (35; 56) ist.

5. Thermostat nach einem der Ansprüche 1 bis 4, bei welchem der Stellgriff (6) verdreh- und längsverschiebbar ist, mit einer mit diesem axial verbundenen, aber undrehbar im Gehäuse geführten und den Stellzylinder aufnehmenden Schiebehülse (13), dadurch gekennzeichnet, daß der Stellgriff (6) auf seiner Stirnseite eine Aussparung (10) hat, durch welche die Schiebehülse (13) zugänglich ist und in welcher das Sichtzeichen untergebracht ist.

6. Thermostat nach Anspruch 5, dadurch gekennzeichnet, daß innerhalb der Aussparung (10) des Stellgriffs (6) auf der Stirnseite des Stellzylinders (23) ein als Heizelement dienender Widerstand (32) liegt.

7. Thermostat nach Anspruch 5 oder 6, dadurch gekennzeichnet, daß die Aussparung (10) durch einen abnehmbaren Deckel (15) verschlossen ist, der eine Öffnung (36) aufweist, durch welche das Sichtzeichen erkennbar ist.

8. Thermostat nach einem der Ansprüche 1 bis 4, bei welchem der Stellgriff (47) gegenüber dem Gehäuse des Thermostaten durch Verdrehen längs verschiebbar und mit dem Stellzylinder (42) fest verbunden ist, und mit einem als Heizelement dienenden, am Gehäuse des Thermostaten nahe dem Stellzylinder befestigten Widerstand (Spule 52), dadurch gekennzeichnet, daß das Sichtzeichen am Stellgriff (47) befestigt und mit dem als Spule (52) ausgebildeten Widerstand durch elektrische Mittel verbunden ist, welche die Verbindung bei Verdrehung und Verschiebung des Stellgriffs (47) gegenüber dem Gehäuse (38) aufrecht erhalten.

9. Thermostat nach Anspruch 8, dadurch gekennzeichnet, daß die elektrischen Mittel aus elastischen Leitungen (54, 55) bestehen, die innerhalb eines Hohlraums (49) des Stellgriffs (47) frei schraubenförmig verlaufen und zu einer in der Mitte der Stirnseite des Stellgriffs (47) angebrachten, als Sichtzeichen dienenden Leuchtdiode (56) führen.

## Revendications

1. Thermostat pour faire fonctionner un organe de réglage notamment une vanne ou robinet comportant un cylindre de réglage qui, à l'aide d'un corps dilatable qu'il contient, déplace un piston de réglage actionnant l'organe de réglage en fonction de sa température et d'un élément chauffant appliqué au cylindre de réglage et qui est commandé dans le temps pour régler la durée d'un abaissement de température à partir d'une horloge de commutation et qui pendant cette période augmente la température du cylindre de réglage par rapport à l'environnement, avec une poignée de réglage (6, 47) susceptible d'être tournée par rapport au boîtier du thermostat et servant à régler la température de déclenchement du thermostat, caractérisé en ce que: la poignée de réglage (6; 47) comporte un signe visible (diode lumineuse (35; 56) qui est rendu visible en fonction de l'état de commutation de l'élément chauffant (résistance 32; 57).

2. Thermostat selon la revendication 1, caractérisé en ce que l'élément chauffant est une résistance électrique (32; 52) et le signe visible est un dispositif d'affichage branché en parallèle sur cette résistance.

3. Thermostat selon la revendication 2, caractérisé en ce qu'au moins une autre résistance (37; 58, 59) est branchée sur l'une des deux conduites (33, 34; 54, 55) entre la résistance (32; 52) et le signe visible.

4. Thermostat selon la revendication 3, caractérisé en ce que le signe visible est une diode lumineuse (35; 56).

5. Thermostat selon l'une des revendications 1 à 4 dont la poignée de réglage (6) est réglable en rotation et en coulissement longitudinal avec un manchon coulissant (13) relié axialement à cette poignée mais guidé de manière bloquée en rotation sur le boîtier et recevant le cylindre de réglage, caractérisé en ce que la poignée de réglage (6) comporte une cavité (10) sur l'un de ses côtés, cavité à travers laquelle le manchon coulissant (13) est accessible et qui reçoit le signe visible.

6. Thermostat selon la revendication 5, caractérisé en ce qu'une résistance (32) servant d'élément chauffant est logée dans la cavité (10) de la poignée de réglage (6) sur la face frontale du cylindre de réglage (23).

7. Thermostat selon les revendications 5 ou 6, caractérisé en ce que la cavité (10) est fermée par un couvercle (15) amovible qui comporte une ouverture (36) à travers laquelle apparaît le signe visible.

8. Thermostat selon l'une des revendications 1 à 4 dont la poignée de réglage (47) est coulissante longitudinalement par rotation par rapport au boîtier du thermostat et est reliée solidairement au cyclindre de réglage (42), et d'une résistance (bobine 52) fixée sur le boîtier du thermostat au voisinage du cylindre de réglage et servant d'élément chauffant, caractérisé en ce que le signe visible est fixé à la poignée de réglage (47) et est relié à la résistance réalisée en forme de bobine (52) par des moyens électriques qui conservent la liaison lorsqu'on fait tourner et coulisser la poignée de réglage (47) par rapport au boîtier (38).

9. Thermostat selon la revendication 8, caractérisé en ce que les moyens électriques sont des conduites élastiques (54, 55) logées en forme de spires libres à l'intérieur d'une cavité (49) de la poignée de réglage (47) et allant à une diode lumineuse (56) servant de signe visible se trouvant au milieu de la face frontale de la poignée de réglage (47).

## Claims

1. Thermostat for operating a control device, especially a valve, with an adjusting cylinder, which by means of its inherent expandable substance and in relation to its temperature shifts an adjusting piston, thus causing the piston to actuate the controlling device, and with a heating element close-lying to the adjusting cylinder and being time-controlled by a contact making clock to set the duration of a room temperature reduction, during which time-period it raises the temperature of the adjusting cylinder in relation to its surroundings, the thermostat with an adjusting handle (6; 47) which can be turned against the housing of the thermostat and serves to set the reaction temperature of the thermostat, characterized by a sign (luminous diode 35; 56) at the adjusting handle (6; 47) which will be visible depending upon the switching condition of the heating element.

2. Thermostat as claimed in claim 1, characterized by the fact that the heating element is an electric resistor (32; 52) and that the visible sign is an indicator device parallely connected to the heating element.

3. Thermostat as claimed in claim 2, characterized by the fact that into at least one of the two connections (33, 34; 54, 55) between the resistor (32; 52) and the visible sign another resistor (37; 58, 59) is inserted.

4. Thermostat as claimed in claim 3, characterized by the fact that the visible sign is a luminous diode (35; 56).

5. Thermostat as claimed in one of the claims 1 to 4, the adjusting handle of which (6) can be turned and shifted lengthwise, with a sliding sleeve (13) to receive the adjusting cylinder, the sliding sleeve being axially connected to the adjusting handle but unturnably guided in the housing, characterized by a sparing (10) in the front side of the adjusting handle (6) thus giving free access to the sliding sleeve (13) in which the visible sign is placed.

6. Thermostat as claimed in claim 5, characterized by a resistor (32) to serve as heating element, placed within the sparing (10) of the adjusting handle (6) at the front side of the adjusting cylinder (23).

7. Thermostat as claimed in claim 5 or 6, characterized by the fact that the sparing (10) is closed by a removable cover (15) with an opening (36) to permit a view of the visible sign.

8. Thermostat as claimed in one of the claims 1 to 4, the adjusting handle (47) of which by turning can be shifted lengthwise to the housing of the thermostat and is firmly connected to the adjusting cylinder (42), and with a resistor (coil 52) serving as heating element, mounted at the housing of the thermostat near the adjusting cylinder, characterized by the fact that the visible sign is mounted at the adjusting handle (47) and by electrical means connected to the resistor developed in form of a coil (52) which are keeping up the connection with the housing (38) independently of the turning and shifting of the adjusting handle (47).

9. Thermostat as claimed in claim 8, characterized by the fact that the electrical means consist of elastic leads (54, 55), wired freely coiled in a hollow space (49) of the adjusting handle (47) and lead to a luminous diode (56) serving as visible sign and placed in the middle of the front side of the adjusting handle (47).

**Fig.1**

**Fig.2**